# EUROPEAN PATENT APPLICATION

(11) **EP 2 500 768 A1**
(43) Date of publication of application: **19.09.2012**
(21) Application number: 10829764.9
(22) Date of filing: 30.08.2010
(51) Int. Cl.: G02F 1/1343, G02F 1/1368

(54) **LIQUID CRYSTAL DISPLAY DEVICE**

(30) Priority: 13.11.2009 JP 2009260462
(71) Applicant: Sharp Kabushiki Kaisha, Osaka-shi, Osaka 545-8522 (JP)
(72) Inventor: TASHIRO, Kunihiro, Osaka-shi, Osaka 545-8522 (JP); NISHIWAKI, Shogo, Osaka-shi, Osaka 545-8522 (JP); FUJIMOTO, Hideki, Osaka-shi, Osaka 545-8522 (JP); HARA, Yoshihito, Osaka-shi, Osaka 545-8522 (JP)
(74) Representative: Müller - Hoffmann & Partner
(86) International application number: PCT/JP2010/064709
(87) International publication number: WO 2011/058804

(57) **Abstract**

An object of the present invention is to provide a liquid crystal display device which has a high luminance and excellent display quality. In a liquid crystal display device of the present invention, a common electrode **(45)** includes a first common electrode **(45a)** and a second common electrode **(45b),** and a pixel electrode **(60)** includes a first trunk portion **(61a),** a second trunk portion **(61b),** a plurality of first branch portions **(62a)** extending in the first direction, a plurality of second branch portions **(62b)** extending in the second direction, a plurality of third branch portions **(62c)** extending in the third direction, and a plurality of fourth branch portions **(62d)** extending in the fourth direction. When a pixel is viewed from a direction perpendicular to a plane of the TFT substrate **(10),** a boundary between the first common electrode **(45a)** and the second common electrode **(45b)** extends over the first trunk portion **(61a)** of the pixel electrode **(60)** and extends in a same direction as an extending direction of the first trunk portion **(61a).**

## Description

### TECHNICAL FIELD

The present invention relates to a liquid crystal display device.

### BACKGROUND ART

As of now, examples of liquid crystal display devices under development which have wide viewing angle characteristics include liquid crystal display devices utilizing the IPS (In-Plane-Switching) mode or the FFS (Fringe Field Switching) mode, which is a transverse electric field mode, and liquid crystal display devices utilizing the VA (Vertical Alignment) mode. Among others, the VA mode is capable of achieving high contrast ratios and is therefore employed in many liquid crystal display devices.

Examples of the VA mode liquid crystal display devices include MVA (Multidomain Vertical Alignment) mode liquid crystal display devices, in which one pixel includes a plurality of domains of different liquid crystal alignment directions, and CPA (Continuous Pinwheel Alignment) mode liquid crystal display devices in which the liquid crystal alignment direction radially continuously varies around a rivet or the like formed on an electrode at the center of a pixel.

An example of the MVA mode liquid crystal display device is described in Patent Document 1. In the liquid crystal display device of Patent Document 1, the alignment control means which extend in two mutually-orthogonal directions are provided to form four liquid crystal domains in one pixel, in which the azimuthal angles of the directors representing the liquid crystal domains are 45° relative to the polarization axes (transmission axes) of a pair of polarizing plates in a crossed Nicols arrangement. Assuming that the direction of the polarization axis of one of the polarizing plates is azimuthal angle 0° and that the counterclockwise direction is the positive direction, the azimuthal angles of the directors of the four liquid crystal domains are 45°, 135°, 225°, and 315°. Such a structure which includes four domains in one pixel is referred to as "four-domain alignment structure" or simply "4D structure".

Another example of the MVA mode liquid crystal display device is described in Patent Document 2. In the liquid crystal display device of this patent document, the pixel electrode (also referred to as "comb tooth-like pixel electrode" or "fishbone-like pixel electrode") has a large number of fine slits (narrow cuts) extending in the azimuthal angles 45°, 135°, 225°, and 315°. Liquid crystal is aligned parallel to these slits, whereby the four-domain alignment structure is realized.

In a VA mode liquid crystal display device, the display quality from the front direction and the display quality from an oblique direction may have a considerable difference. Particularly in the case of middle grayscale level display, the display characteristics such as the hue and the gamma characteristic when viewed from an oblique direction may sometimes be greatly different from those obtained when viewed from the front direction. The optical axis direction of liquid crystal molecules is identical with the long axis direction of the molecules. In the case of middle grayscale level display, the optical axis direction of the liquid crystal molecules is inclined by some degrees relative to the principal surface of a substrate. Thus, in this situation, the display characteristics are different between the case where the display is viewed from the front and the case where the display is viewed obliquely.

Specifically, a displayed image which is viewed from an oblique direction appears generally whitish as compared with a displayed image which is viewed from the front direction. Such a phenomenon is also called a "whitening" phenomenon. For example, in the case where a human face is displayed, the human face generally appears whitish when viewed from an oblique direction, and a fine grayscale level expression of a flesh color is marred so that the image can appear whitish, even though the expression of the human face is perceived without a sense of incongruity when viewed from the front direction.

Liquid crystal display devices which have a technique for ameliorating such a whitening phenomenon are described in Patent Documents 3 to 5. In these liquid crystal display devices, one pixel is divided into a plurality of (e.g., two) sub-pixels each of which includes a sub-pixel electrode, and the plurality of the sub-pixel electrodes are supplied with different potentials.

In the liquid crystal display device disclosed in Patent Document 3, two sub-pixel electrodes are coupled to different source lines via different switching elements and are driven so as to be supplied with different potentials. Since the sub-pixel electrodes are at different potentials, the voltages applied across the liquid crystal layers of the sub-pixels are different, so that the sub-pixels have different transmittances. This realizes amelioration of the whitening phenomenon.

In the liquid crystal display device disclosed in Patent Document 4, two switching elements are provided so as to correspond to respective one of two sub-pixel electrodes, and the two switching elements are coupled to different gate lines. At least one of the ON timings of the two gate lines is varied, whereby the gate lines are driven such that the two sub-pixel electrodes are at different potentials.

In the liquid crystal display device disclosed in Patent Document 5, a plurality of storage capacitance lines are provided so as to correspond to respective one of two sub-pixel electrodes such that storage capacitors are formed between the sub-pixel electrodes and corresponding ones of the storage capacitor lines. The plurality of storage capacitor lines are supplied with different CS voltages, whereby the effective applied voltage across the liquid crystal layer is varied.

### CITATION LIST

### PATENT LITERATURE

Patent Document 1: Japanese Laid-Open Patent Publication No. 11-242225
Patent Document 2: Japanese Laid-Open Patent Publication No. 2002-357830
Patent Document 3: Japanese Laid-Open Patent Publication No. 2006-209135
Patent Document 4: Japanese Laid-Open Patent Publication No. 2006-139288
Patent Document 5: Japanese Laid-Open Patent Publication No. 2004-62146

### SUMMARY OF INVENTION

### TECHNICAL PROBLEM

In the liquid crystal display device of Patent Document 3, it is necessary to provide two source lines for each pixel column, so that the number of source lines increases. In the liquid crystal display device of Patent Document 4, it is necessary to provide two gate lines for each pixel row, so that the number of gate lines increases. Further, in the liquid crystal display devices of Patent Documents 3 and 4, it is necessary to provide a TFT for each sub-pixel electrode. Thus, in these liquid crystal display devices, the aperture ratio of the display region decreases.

In the liquid crystal display device of Patent Document 5, the applied voltage across the liquid crystal layer of the sub-pixels does not vary as much as the difference in the CS voltage. Particularly, when the gate-drain capacitance of the TFT is large, the difference in effective applied voltage across the liquid crystal layer of the sub-pixels is not so large even if the CS voltages are different, so that the difference in transmittance between the sub-pixels is not sufficiently large. In this case, sufficiently adjusting the grayscale characteristics of the sub-pixels leads to an increase in power consumption, so that it is difficult to efficiently ameliorate the whitening phenomenon.

The present invention was conceived in view of the above problems. One of the objects of the present invention is to provide a liquid crystal display device in which the whitening phenomenon can be efficiently ameliorated and the decrease in transmittance can be prevented.

### SOLUTION TO PROBLEM

A liquid crystal display device of the present invention includes: a TFT substrate which has a pixel electrode provided in a pixel; a counter substrate which has a common electrode provided opposite to the pixel electrode; and a vertical alignment type liquid crystal layer which is provided between the TFT substrate and the counter substrate, wherein the common electrode includes a first common electrode and a second common electrode which is capable of applying a different voltage from that applied by the first common electrode, the pixel electrode includes a first trunk portion, a second trunk portion, a plurality of first branch portions extending from the first trunk portion or the second trunk portion in a first direction, a plurality of second branch portions extending from the first trunk portion or the second trunk portion in a second direction, a plurality of third branch portions extending from the first trunk portion or the second trunk portion in a third direction, and a plurality of fourth branch portions extending from the first trunk portion or the second trunk portion in a fourth direction, the first direction, the second direction, the third direction, and the fourth direction are different directions from one another, and when the pixel is viewed from a direction perpendicular to a plane of the TFT substrate, a boundary between the first common electrode and the second common electrode extends over the first trunk portion of the pixel electrode and extends in a same direction as an extending direction of the first trunk portion.

In one embodiment, the first direction, the second direction, the third direction, and the fourth direction are different from the extending direction of the first trunk portion by 45°, 135°, 225°, and 315°, respectively.

In one embodiment, a slit is provided at the boundary between the first common electrode and the second common electrode, and when a voltage is applied between the pixel electrode and the common electrode, an azimuth of a director of a liquid crystal orientation which is defined by respective one of the plurality of first branch portions, the plurality of second branch portions, the plurality of third branch portions, and the plurality of fourth branch portions forms an acute angle with an azimuth of a director of a liquid crystal orientation which is defined by the first common electrode, the second common electrode, and the slit.

In one embodiment, the acute angle is about 45°.

In one embodiment, the pixel electrode includes a plurality of fifth branch portions extending in the first direction, a plurality of sixth branch portions extending in the second direction, a plurality of seventh branch portions extending in the third direction, and a plurality of eighth branch portions extending in the fourth direction.

In one embodiment, when a voltage is applied between the pixel electrode and the common electrode, the plurality of first branch portions, the plurality of second branch portions, the plurality of third branch portions, and the plurality of fourth branch portions form four domains which have different liquid crystal orientations, and the plurality of fifth branch portions, the plurality of sixth branch portions, the plurality of seventh branch portions, and the plurality of eighth branch portions form four other domains which have different liquid crystal orientations.

In one embodiment, when the pixel is viewed from a direction perpendicular to the plane of the TFT substrate, the plurality of first branch portions, the plurality of second branch portions, the plurality of seventh branch portions, and the plurality of eighth branch portions are provided so as to extend over the first common electrode, and the plurality of third branch portions, the plurality of fourth branch portions, the plurality of fifth branch portions, and the plurality of sixth branch portions are provided so as to extend over the second common electrode.

In one embodiment, in the pixel, the second common electrode includes a first electrode portion and a second electrode portion between which the first common electrode is interposed, and when the pixel is viewed from a direction perpendicular to the plane of the TFT substrate, the plurality of third branch portions and the plurality of fourth branch portions are provided so as to extend over the first electrode portion, and the plurality of fifth branch portions and the plurality of sixth branch portions are provided so as to extend over the second electrode portion.

In one embodiment, the pixel electrode includes a third trunk portion and a fourth trunk portion, and the plurality of fifth branch portions, the plurality of sixth branch portions, the plurality of seventh branch portions, and the plurality of eighth branch portions extend from the third trunk portion or the fourth trunk portion.

In one embodiment, when the pixel is viewed from a direction perpendicular to the plane of the TFT substrate, a boundary between the first electrode portion of the second common electrode and the first common electrode extends over the first trunk portion and extends in a same direction as the extending direction of the first trunk portion, and a boundary between the second electrode portion of the second common electrode and the first common electrode extends over the third trunk portion and extends in a same direction as an extending direction of the third trunk portion.

In one embodiment, the liquid crystal display device further includes another pixel which is adjacent to the pixel, wherein the another pixel includes part of the second common electrode, and when the pixel and the another pixel are viewed from a direction perpendicular to the plane of the TFT substrate, the second common electrode of the pixel and a second common electrode of the another pixel are provided between the first common electrode of the pixel and a first common electrode of the another pixel.

In one embodiment, a shape of the pixel electrode of the pixel and a shape of a pixel electrode of the another pixel are symmetric about a boundary line between the second common electrode of the pixel and the second common electrode of the another pixel.

In one embodiment, a slit is provided between the second common electrode of the pixel and the second common electrode of the another pixel.

In one embodiment, the liquid crystal display device further includes another pixel which is adjacent to the pixel, wherein the another pixel includes part of the second common electrode, and when the pixel and the another pixel are viewed from a direction perpendicular to the plane of the TFT substrate, the second common electrode of the pixel is provided between the first common electrode of the pixel and a first common electrode of the another pixel, and the first common electrode of the another pixel is provided between the second common electrode of the pixel and a second common electrode of the another pixel.

In one embodiment, the liquid crystal display device further includes another pixel which is adjacent to the pixel, a slit is provided between the common electrode of the pixel and the common electrode of the another pixel.

In one embodiment, the liquid crystal display device further includes an alignment sustaining layer over a surface of at least one of the TFT substrate and the counter substrate which is closer to the liquid crystal layer, the alignment sustaining layer being configured to define an orientation of a liquid crystal in the absence of an applied voltage, wherein the alignment sustaining layer is made of a polymer which is obtained by photopolymerizing a photopolymerizable monomer contained in a liquid crystal layer in the presence of an applied voltage across the liquid crystal layer.

In one embodiment, the liquid crystal display device further includes a display region which includes a plurality of pixels and a peripheral region lying outside the display region, wherein each of the first common electrode and the second common electrode is divided into a plurality of segments linearly extending parallel to one another in the display region, the plurality of segments of the first common electrode and the plurality of segments of the second common electrode are alternately provided, in the peripheral region, the plurality of segments of the first common electrode are coupled together and coupled to a first terminal section, and the plurality of segments of the second common electrode are coupled together and coupled to a second terminal section, and in the peripheral region, a wire path of the first common electrode and a wire path of the second common electrode are generally symmetrically arranged.

### ADVANTAGEOUS EFFECTS OF INVENTION

According to the present invention, a liquid crystal display device can be provided in which the whitening phenomenon and the decrease in transmittance are ameliorated.

### BRIEF DESCRIPTION OF DRAWINGS

[FIG. **1**] A perspective view schematically showing a configuration of a liquid crystal display device **100** according to an embodiment of the present invention.
[FIG. **2**] A plan view schematically showing a configuration of a plurality of pixels **50** in the liquid crystal display device **100.**
[FIG. **3**] A plan view showing a configuration of a pixel electrode **60** of the pixel **50** in Embodiment 1 of the present invention.
[FIG. **4**] A cross-sectional view showing a configuration of the pixel **50** of Embodiment 1, which is taken along line **A-A'** of FIG. **3****.**
[FIG. **5**] **(a)** is a plan view showing the shape of a common electrode **45** in the pixel **50** of Embodiment 1; **(b)** is a plan view showing the relationship of the layout between the pixel electrode **60** and the common electrode **45** in the pixel **50.**
[FIG. **6**] A plan view showing a layout form of the common electrode **45** in the liquid crystal display device **100** of the present invention.
[FIG. **7**] **(a)** to **(c)** are diagrams for illustrating the alignment of the liquid crystal in the liquid crystal display device **100** of Embodiment 1.
[FIG. **8**] **(a)** is a plan view showing the shape of a common electrode **45** in a pixel of a liquid crystal display device of a comparative example; **(b)** is a plan view showing the relationship of the layout between the pixel electrode **60** and the common electrode **45** in the pixel.
[FIG. **9**] **(a)** to **(c)** are diagrams for illustrating the alignment of the liquid crystal in the liquid crystal display device of the comparative example.
[FIG. **10**] **(a)** is a plan view showing the shape of a common electrode **45** in a pixel **50** of Embodiment 2 of the liquid crystal display device of the present invention; **(b)** is a plan view showing the shape of a pixel electrode **60** in the pixel **50** of Embodiment 2.
[FIG. **11**] **(a)** is a plan view showing the shape of the common electrodes **45** in two adjacent pixels **50** in Embodiment 2; **(b)** is a plan view showing the relationship of the layout between the pixel electrodes **60** and the common electrodes **45** in the two pixels **50.**
[FIG. **12**] **(a)** to **(c)** are diagrams for illustrating the configuration of a common electrode and the alignment of the liquid crystal in the liquid crystal display device of the second comparative example.
[FIG. **13**] **(a)** to **(c)** are diagrams for illustrating the alignment of the liquid crystal in the liquid crystal display device **100** of Embodiment 2.
[FIG. **14**] **(a)** is a plan view showing the shape of common electrodes **45** in two adjacent pixels **50** in a liquid crystal display device **100** of Embodiment 3 of the present invention; **(b)** is a plan view showing the relationship of the layout between the pixel electrodes **60** and the common electrodes **45** in the two pixels **50.**
[FIG. **15**] **(a)** and **(b)** are diagrams for illustrating the alignment of the liquid crystal in the liquid crystal display device **100** of Embodiment 3.

### DESCRIPTION OF EMBODIMENTS

Hereinafter, a liquid crystal display device **100** according to an embodiment of the present invention is described with reference to the drawings. Note that, however, the present invention is not limited to the embodiment described below.

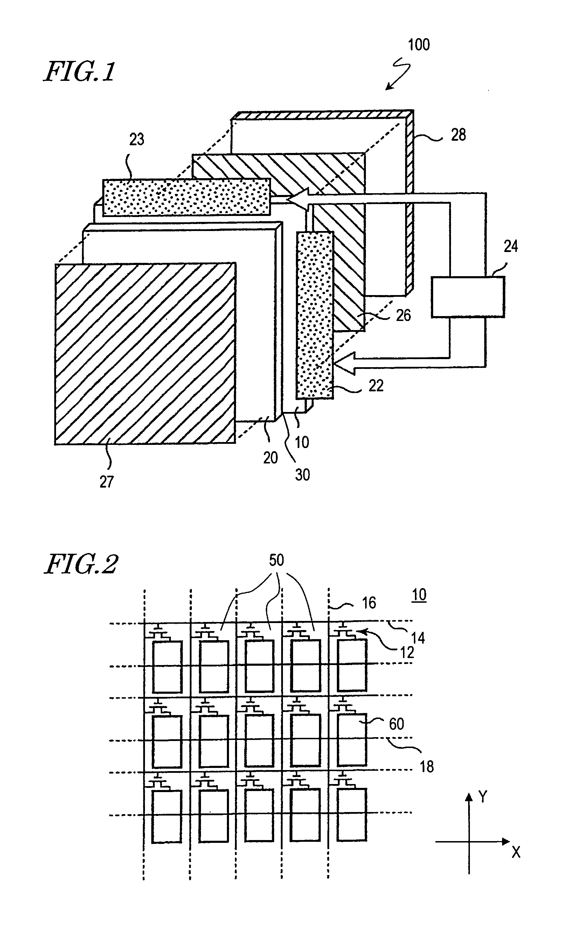

FIG. **1** is a perspective view schematically showing the configuration of the liquid crystal display device **100.** FIG. **2** is a plan view schematically showing the configuration of a plurality of pixels **50** of the liquid crystal display device **100.**

As shown in FIG. **1****,** the liquid crystal display device **100** includes a TFT substrate **10** and a counter substrate (color filter (CF) substrate) **20** which oppose each other with a liquid crystal layer **30** interposed therebetween, polarizers **26** and **27** which are provided on the outer side of respective one of the TFT substrate **10** and the counter substrate **20,** and a backlight unit **28** for emitting display light toward the polarizer **26.**

The liquid crystal display device **100** is a vertical alignment type liquid crystal display device which performs display in a normally-black mode using the plurality of pixels **50** which are in a matrix arrangement along the X direction (the horizontal direction in the drawing) and the Y direction (the vertical direction in the drawing) as shown in FIG. **2****.** The pixel **50** corresponds to a display region of any one color of R, G, and B in the minimum unit of display consisting of three primary colors, red (R), green (G), and blue (B). Note that the minimum unit of display may consist of four or more primary colors (multi-primary color display). In that case, the pixel **50** corresponds to a display region of any one of a plurality of primary colors that form the minimum unit of display.

In the TFT substrate **10,** a plurality of scan lines (gate bus lines) **14** and a plurality of signal lines (data bus lines) **16** are arranged so as to cross one another at right angles. Near each of the intersections of the plurality of scan lines **14** and the plurality of signal lines **16,** a TFT **12,** which is an active element, is provided for each of the pixels **50.** In each of the pixels **50,** a pixel electrode **60** is provided which is electrically coupled to a drain electrode of the TFT **12** and which is made of, for example, ITO (Indium Tin Oxide) or IZO (Indium Zinc Oxide). Between two adjacent ones of the scan lines **14,** a storage capacitor line (also referred to as "storage capacitor bus line" or "Cs line") **18** extending parallel to the scan lines **14** may be provided.

The plurality of scan lines **14** and the plurality of signal lines **16** are respectively coupled to a scan line driving circuit **22** and a signal line driving circuit **23** which are shown in FIG. **1****.** The scan line driving circuit **22** and the signal line driving circuit **23** are coupled to a control circuit **24.** According to the control by the control circuit **24,** scan signals for switching the ON-OFF state of the TFTs **12** are supplied from the scan line driving circuit **22** to the scan lines **14.** Also, according to the control by the control circuit **24,** display signals (applied voltage to the pixel electrode **60**) are supplied from the signal line driving circuit **23** to the plurality of signal lines **16.**

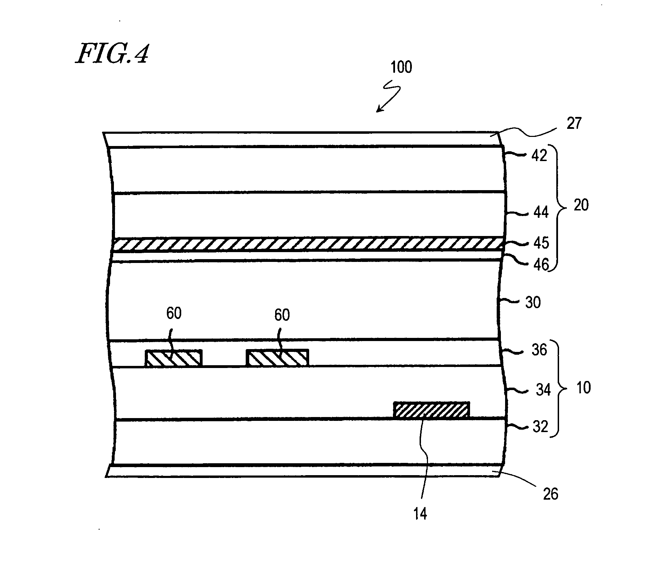

The TFT substrate **10** includes, as shown in FIG. **4****,** a transparent substrate **32,** an insulating layer **34,** and an alignment film (vertical alignment film) **36** for vertically aligning the liquid crystal relative to the substrate plane. The scan line **14** is provided between the transparent substrate **32** and the insulating layer **34.** The pixel electrode **60** is provided between the insulating layer **34** and the alignment film **36.** The counter substrate **20** includes a transparent substrate **42,** a color filter **44,** a common electrode (counter electrode) **45,** and an alignment film **46** that is a vertical alignment film. In the case of three primary color display, the color filter **44** includes a R (red) filter, a G (green) filter, and a B (blue) filter, each of which is arranged so as to correspond to a pixel. The common electrode **45** is formed so as to extend over the plurality of pixel electrodes **60.** Liquid crystal molecules lying between these electrodes are aligned in every pixel according to the potential difference caused between the common electrode **45** and each of the pixel electrodes **60,** whereby display is performed.

The liquid crystal layer **30** includes a nematic liquid crystal which has a negative dielectric anisotropy (Δε<0). In the absence of an applied voltage, the liquid crystal of the liquid crystal layer **30** is aligned generally vertically to the substrate plane of the TFT substrate **10** or the counter substrate **20** due to the function of the alignment films **36** and **46.** Note that, however, an embodiment may be possible in which only one of the two alignment films **36** and **46** is formed.

Each of the alignment films **36** and **46** includes a vertical alignment layer which has the function of aligning the liquid crystal vertically to the substrate plane and an alignment sustaining layer which causes the liquid crystal in the absence of an applied voltage to have a pretilt. The alignment sustaining layers are made of a polymer which is produced by photopolymerizing a photopolymerizable monomer contained in a liquid crystal layer in the presence of an applied voltage across the liquid crystal layer after formation of a liquid crystal cell. Due to the alignment sustaining layers, even in the absence of an applied voltage, the liquid crystal can sustain (memorize) a pretilt which is caused in a direction slightly inclined (by about 2-3°) from the direction that is vertical to the substrate plane and an orientation azimuth (pretilt azimuth). This technique is called a Polymer Sustained Alignment (PSA) technique. By using this technique, the response speed of the liquid crystal orientation at the time of voltage application can be improved. Note that, however, a configuration in which only one of the two alignment films **36** and **46** has an alignment sustaining layer or a configuration in which each of the two alignment films only includes a vertical alignment layer may be possible.

### (Embodiment 1)

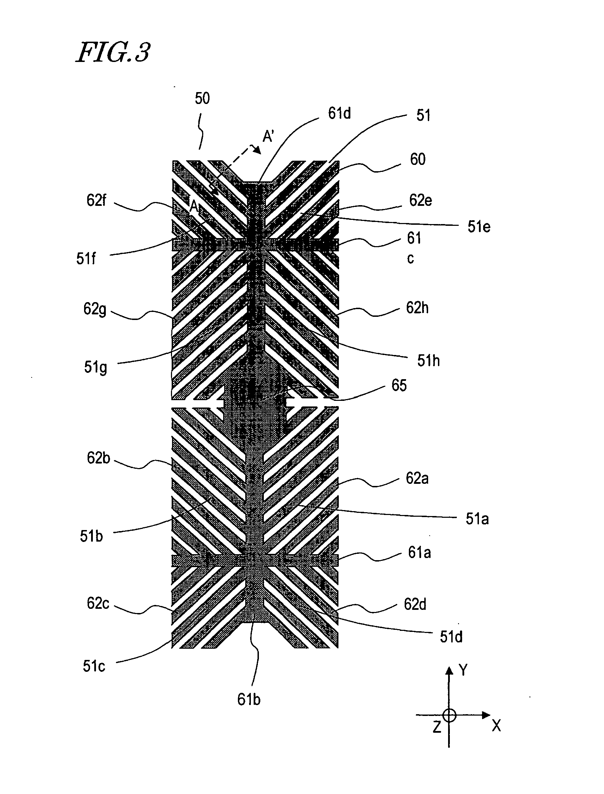

FIG. **3** is a plan view showing the configuration of the pixel electrode **60** of the liquid crystal display device **100** according to Embodiment 1 of the present invention. FIG. **4** is a cross-sectional view showing the configuration of the pixel **50,** which is taken along line **A-A'** of FIG. **3****.** Note that, throughout the descriptions of the embodiments of the present invention, the extending direction of the scan lines **14** (the horizontal direction in FIG. **3****)** is referred to as "X direction", the extending direction of the signal lines **16** (the vertical direction in FIG. **3****)** is referred to as "Y direction", and a direction which is perpendicular to the substrate plane of the liquid crystal display device **100** (including a plane of the TFT substrate **10)** is referred to as "Z direction". The positive X direction (the left-to-right direction in FIG. **3****)** is identical with the azimuthal angle 0°, relative to which the azimuthal angles are assigned counterclockwise. The positive Y direction (the bottom-to-top direction in FIG. **3****)** is identical with the azimuthal angle 90°.

In each of the pixels **50,** the pixel electrode **60** which is in the shape of a fishbone is provided. The pixel electrode **60** includes a trunk portion **61a** extending in the X direction (first trunk portion), a trunk portion **61b** extending in the Y direction (second trunk portion), a plurality of branch portions **62a** (first branch portions) extending from the trunk portion **61a** or the trunk portion **61b** in 45° direction (first direction), a plurality of branch portions **62b** (second branch portions) extending from the trunk portion **61a** or the trunk portion **61b** in 135° direction (second direction), a plurality of branch portions **62c** (third branch portions) extending from the trunk portion **61a** or the trunk portion **61b** in 225° direction (third direction), and a plurality of branch portions **62d** (fourth branch portions) extending from the trunk portion **61a** or the trunk portion **61b** in 315° direction (fourth direction).

The pixel electrode **60** further includes a trunk portion **61c** extending in the X direction (third trunk portion), a trunk portion **61d** extending in the Y direction (fourth trunk portion), a plurality of branch portions **62e** (fifth branch portions) extending from the trunk portion **61c** or the trunk portion **61d** in 45° direction, a plurality of branch portions **62f** (sixth branch portions) extending from the trunk portion **61c** or the trunk portion **61d** in 135° direction, a plurality of branch portions **62g** (seventh branch portions) extending from the trunk portion **61c** or the trunk portion **61d** in 225° direction, and a plurality of branch portions **62h** (eighth branch portions) extending from the trunk portion **61c** or the trunk portion **61d** in 315° direction.

Since the pixel electrode **60** has the above-described shape, a slit (a space in which the electrode material is not provided) is formed between two adjacent ones of the branch portions **62a** to **62h** so as to extend in the same direction as the two adjacent branch electrodes. Each of the branch portions **62a** to **62h** and each slit has a width of 3.0 µm, for example. If the width of the branch portions and the width of the slits are excessively large or excessively small, the alignment controlling force would not appropriately operate in the extending direction of the branch portions and slits. Thus, the width of the branch portions and slits is preferably in the range of not less than 2.0 µm and not more than 5.0 µm.

Due to the function of the pixel electrode **60** that has the above-described shape, a 4D-structure multi-domain configuration, consisting of eight domains, is formed in the pixel **50.** In the absence of an applied voltage, due to the function of the alignment films **36** and **46,** the liquid crystal in the pixel **50** has a pretilt in a direction slightly inclined from the direction perpendicular to the substrate plane. The azimuth of the pretilt is identical with the azimuth memorized in the alignment sustaining layer, i.e., the direction along the branch portions **62a** to **62h** and the slits, and in other words, identical with a direction inclined by 45° from the X direction or the Y direction.

When a voltage is applied, the liquid crystal in each domain is oriented such that the head portion of the liquid crystal (an end of the liquid crystal which is closer to the counter substrate) falls toward the inner part (or toward the trunk portion) of the pixel **50**, and the liquid crystal transitions to an attitude parallel to the substrate plane. The azimuth of the orientation is substantially identical with the azimuth of the pretilt. Since the azimuth of the orientation is identical with the azimuth of the pretilt, a transition of the orientation to the correct azimuth at a very quick response speed is realized.

In this way, when a voltage is applied, a domain **51a** is formed over the plurality of branch portions **62a,** a domain **51b** is formed over the plurality of branch portions **62b,** a domain **51c** is formed over the plurality of branch portions **62c,** a domain **51d** is formed over the plurality of branch portions **62d,** a domain **51e** is formed over the plurality of branch portions **62e,** a domain **51f** is formed over the plurality of branch portions **62f,** a domain **51g** is formed over the plurality of branch portions **62g,** and a domain **51h** is formed over the plurality of branch portions **62h.**

The polarizers **26** and **27** shown in FIG. **1** are arranged such that one of the polarizers has an absorption axis extending in the X direction and the other has an absorption axis extending in the Y direction (crossed Nicols arrangement). The directions of the absorption axes are different from each one of the directions of the plurality of branch portions **62a** to **62h** by 45°. Therefore, the alignment of the liquid crystal in each of the domains **51a** to **51h** is also different from the directions of the absorption axes by 45°. This configuration enables display in which the luminance is high and the azimuthal angle dependence of the luminance is small.

The pixel electrode **60** has a storage capacitor counter electrode **65** provided at a central portion of the pixel **50.** Under the storage capacitor counter electrode **65,** an unshown storage capacitor electrode is provided which is electrically coupled to a storage capacitor line **18.** A storage capacitor is formed between the storage capacitor electrode and the storage capacitor counter electrode **65.** Note that, however, the storage capacitor counter electrode **65** may be provided under the pixel electrode **60** with an insulating film interposed therebetween. In that case, the pixel electrode **60** and the storage capacitor counter electrode **65** are electrically coupled together via a contact hole formed in the insulating film.

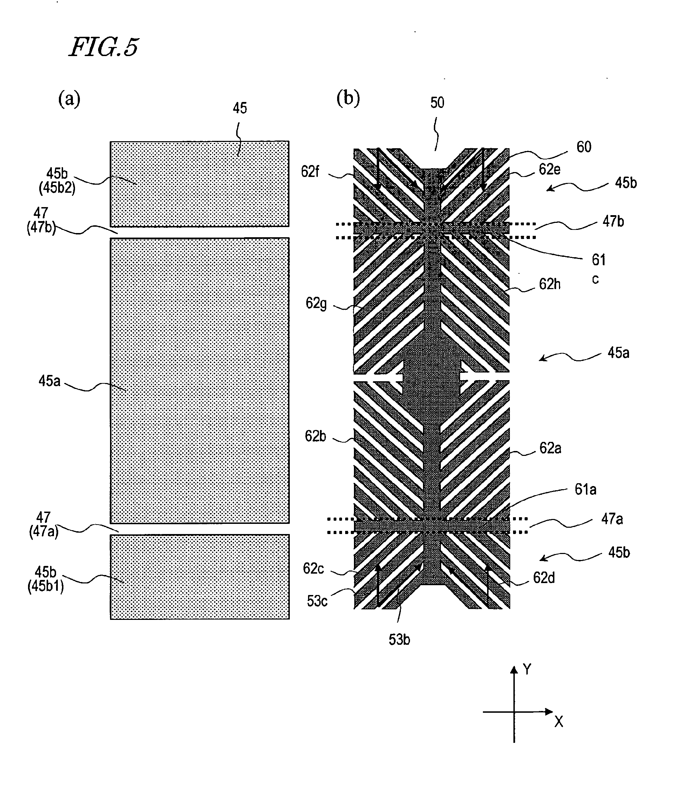

FIG. **5(a)** shows the shape of the common electrode **45** in one of the pixels **50.** FIG. **5(b)** shows the relationship of the layout between the common electrode **45** and the pixel electrode **60** in one of the pixels **50.**

As shown in FIG. **5(a)****,** the common electrode **45** includes a first common electrode **45a** and a second common electrode **45b.** In this specification, the thus-separated common electrode is referred to as "separated common electrode". In one of the pixels **50,** the first common electrode **45a** is interposed between two second common electrodes **45b1** (first electrode portion) and **45b2** (second electrode portion). There are slits (spaces in which the electrode material is not provided) **47 (47a** and **47b)** between the first common electrode **45a** and the second common electrode **45b1** and between the first common electrode **45a** and the second common electrode **45b2,** respectively. The width of the slits **47a** and **47b** is from 6.0 µm to 10.0 µm.

The second common electrode **45b1** is integral with the upper second common electrode **45b2** of an adjacent pixel **50** on the lower side (the negative Y direction side). The second common electrode **45b2** is integral with the lower second common electrode **45b1** of an adjacent pixel **50** on the upper side (the positive Y direction side).

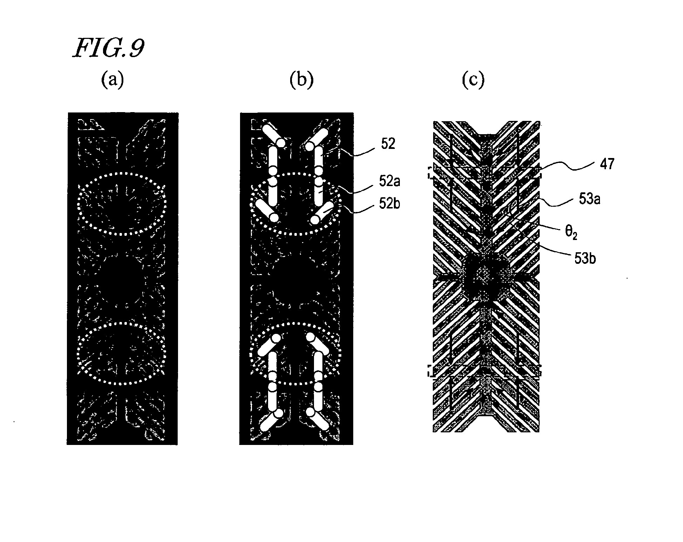

When the second common electrodes **45b** of two adjacent pixels **50** are integral with each other, a liquid crystal director **53c** in a boundary region of the second common electrode **45b1** is oriented in azimuth 90°, and a liquid crystal director **53c** in a boundary region of the second common electrode **45b2** is oriented in azimuth 270°, due to the slits formed between the pixel electrodes **60** of the TFT substrate **10.** Liquid crystal directors **53b** of the branch portions **62c** and **62d** extending over the second common electrode **45b1** are oriented in azimuths 45° and 135°, and liquid crystal directors **53b** of the branch portions **62e** and **62f** extending over the second common electrode **45b2** are oriented in azimuths 225° and 315°. Therefore, an angle formed between the liquid crystal director azimuth **53c** which is achieved by the slit formed between the pixel electrodes **60** of the TFT substrate **10** and the liquid crystal director azimuth **53b** which is achieved by the branch portions **62c, 62d, 62e,** and **62f** is an acute angle, specifically 45°. Thus, an alignment disturbance in a boundary region, which will be described later with a comparative example in FIG. **9****,** would not occur.

When the second common electrodes **45b** of two adjacent pixels **50** are separate from each other, there is another slit between the second common electrode **45b1** and the second common electrode **45b2.** However, the TFT substrate **10** lying under the common electrode also has a slit between the pixel electrodes **60** of the two pixels **50,** and therefore, no electric field is produced in this part, so that the liquid crystal maintains its initial alignment. Thus, in Embodiment 1, in either of the case where the second common electrode **45b1** is integral with the second common electrode **45b2** of an adjacent pixel or the case where the second common electrode **45b1** and the second common electrode **45b2** are separate from each other by a slit, there is no problem in the alignment characteristics of the liquid crystal, and an alignment disturbance would not occur in a boundary region between the pixel electrodes.

As shown in FIG. **5(b)****,** when viewed from the Z direction, the boundary between the first common electrode **45a** and the second common electrode **45b1** and a slit **47a** extend over the trunk portion **61a** of the pixel electrode **60** and extend in the same direction as the extending direction of the first trunk portion **61a.** The boundary between the first common electrode **45a** and the second common electrode **45b2** and a slit **47b** extend over the trunk portion **61c** of the pixel electrode **60** and extend in the same direction as the extending direction of the trunk portion **61c.**

When viewed from the Z direction, the plurality of branch portions **62a,** the plurality of branch portions **62b,** the plurality of branch portions **62g,** and the plurality of branch portions **62h** are arranged so as to extend over the first common electrode **45a.** The plurality of branch portions **62c,** the plurality of branch portions **62d,** the plurality of branch portions **62e,** and the plurality of branch portions **62f** are arranged so as to extend over the second common electrode **45b.** More specifically, the plurality of branch portions **62c** and the plurality of branch portions **62d** are arranged so as to extend over the first electrode portion **45b1** of the second common electrode **45b.** The plurality of branch portions **62e** and the plurality of branch portions **62f** are arranged so as to extend over the second electrode portion **45b2** of the second common electrode **45b.**

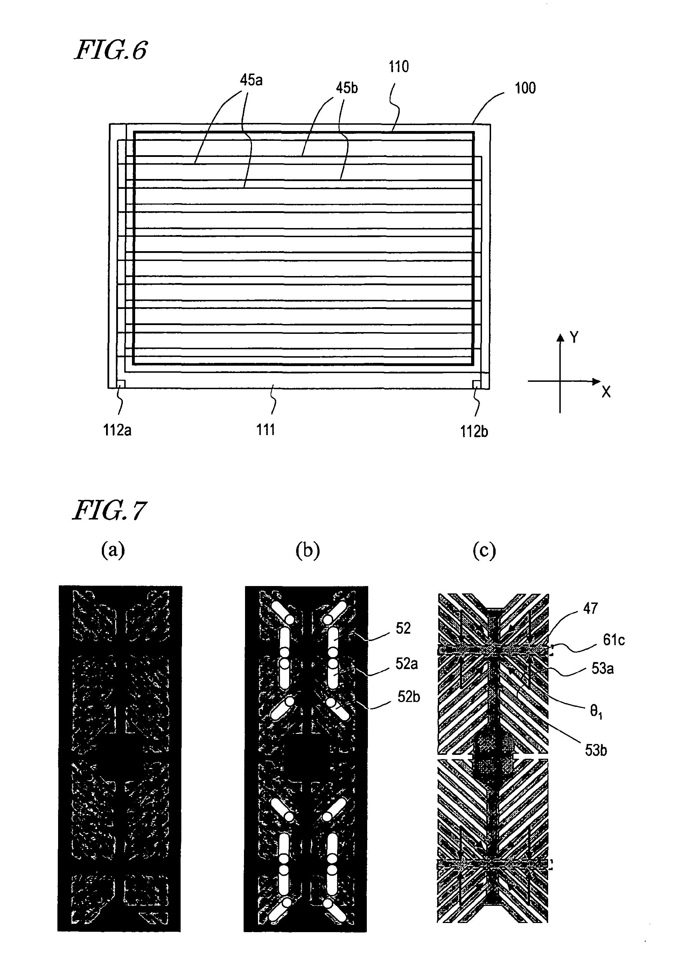

FIG. **6** schematically shows the configuration of a common electrode **45** in the counter substrate **20.**

As shown in FIG. **6****,** the liquid crystal display device **100** has a display region **110** which includes a plurality of pixels and a peripheral region **111** which is lying outside the display region **110** (in a peripheral portion of the liquid crystal display device **100**). In the display region **110,** a plurality of segments of the first common electrode **45a,** which have a constant width, linearly extend in the positive X direction, and a plurality of segments of the second common electrode **45b,** which have a constant width, linearly extend in the negative X direction. The plurality of segments of the first common electrode **45a** and the plurality of segments of the second common electrode **45b** are arranged so as to be parallel with one another and so as to alternately occur when viewed along the Y direction. Each of the plurality of segments of the first common electrode **45a** extends through a central portion of one pixel row. Each of the plurality of segments of the second common electrode **45b** extends so as to overlap two adjacent pixel rows.

The plurality of segments of the first common electrode **45a** are bundled into one signal line (or electrically coupled together) at the left side of the peripheral region **111** and coupled to an input terminal (first terminal). The plurality of segments of the second common electrode **45b** are bundled at the right side of the peripheral region **111** and coupled to another input terminal (second terminal). In the peripheral region **111,** the wire path of the first common electrode **45a** and the wire path of the second common electrode **45b** are generally symmetrically arranged except that the plurality of segments have a shift in the Y direction between the common electrodes.

In FIG. **6****,** each of the first common electrode **45a** and the second common electrode **45b** is schematically expressed by a straight line with no width, which is different from the actual electrode. This is for the sake of simply illustrating an arrangement where the first common electrode **45a** and the second common electrode **45b** alternately occur in the display region **110.** The actual electrode shapes and the actual positions of the first common electrode **45a** and the second common electrode **45b** may not be identical with those shown in FIG. **6****.**

It is possible to apply different voltages to the plurality of first common electrodes **45a** and the plurality of second common electrodes **45b.** The voltage supplied to the plurality of first common electrodes **45a** (first common voltage) and the voltage supplied to the plurality of second common electrodes **45b** (second common voltage) are generated in the control circuit of the liquid crystal display device **100** or in an external circuit.

Since the common electrode **45** and the pixel electrode **60** which have the above-described configurations are provided, in the pixel **50,** the voltage applied between the first common electrode **45a** and the plurality of branch portions **62a,** the plurality of branch portions **62b,** the plurality of branch portions **62g,** and the plurality of branch portions **62h** and the voltage applied between the second common electrode **45b** and the plurality of branch portions **62c,** the plurality of branch portions **62d,** the plurality of branch portions **62e,** and the plurality of branch portions **62f** can be different voltages. When these voltages are different, the inclination of the liquid crystal in the domains **51a, 51b, 51g,** and **51h** (referred to as "first 4D domains") and the inclination of the liquid crystal in the domains **51c, 51d, 51e,** and **51f** (referred to as "second 4D domains") are different, so that the transmittance in the first 4D domains and the transmittance in the second 4D domains are different. In this way, two luminances and two transmittance characteristics (the relationship between the transmittance and the voltage (the relative voltage value to the maximum applied voltage in each domain): also referred to as "V-T characteristic") can be concurrently realized in one pixel **50.**

Since the transmittance characteristic of the first 4D domains and the transmittance characteristic of the second 4D domains can be different, the overall transmittance characteristic of an entire single pixel **50** can be realized by combination of two different transmittance characteristics. Thus, by modulating the applied voltages to the first common electrode **45a** and the second common electrode **45b,** the transmittance characteristic and the polar angle dependence of the transmittance of the entire pixel **50** can be modified to more ideal ones. Note that, in the present embodiment, in the case of middle grayscale level display, the voltages are modulated such that the luminance of a portion including the first common electrode **45a** is lower than the luminance of a portion including the second common electrode **45b.** Specifically, a portion of the pixel **50** including the first common electrode **45a** forms a darker region, and another portion of the pixel **50** including the second common electrode **45b** forms a brighter region.

In the liquid crystal display device **100** of the present embodiment, the 4D structure is employed, so that the difference in luminance which arises when the display is viewed from different azimuthal angles (azimuthal angle dependence) is small. Further, a Dual Common driving is performed using a separated common electrode configuration, so that the difference in luminance which arises when the display is viewed from different polar angles (also referred to as "viewing angle characteristic" or "γ shift") is also small.

Furthermore, according to the liquid crystal display device **100** of the present embodiment, other advantages are obtained as described below.

FIG. **7(a)** is a diagram showing the transmittance distribution (the luminance distribution in the case where the maximum luminance is given) in the pixel **50** in the presence of an applied voltage. FIGS. **7(b)** and **7(c)** are diagrams for illustrating the alignment of the liquid crystal **52** in that case. An alignment example described herein is achieved under the conditions that the voltage applied to the first common electrode **45a** and the second common electrode **45b** is 0 V, and the voltage applied to the pixel electrode **60** is 5 V.

Here, in the diagrams for illustrating the alignment of the liquid crystal **52,** the alignment shown is achieved when the same voltage is applied to the first common electrode **45a** and the second common electrode **45b.** However, when different voltages are applied to the first common electrode **45a** and the second common electrode **45b,** the orientations (directors) of the liquid crystal viewed from the Z direction are the same except that a darker region and a brighter region are formed.

In FIG. **7(b)****, 52a** represents the liquid crystal which is aligned in the vicinity of the slit **47** of the common electrode **45,** and **52b** represents the liquid crystal which is aligned in a region excluding the vicinity of the slit **47** (a large part of the liquid crystal in each domain). In other words, **52a** represents the liquid crystal which is aligned according to the alignment controlling force of the slit **47,** and **52b** represents the liquid crystal which is aligned according to the alignment controlling force of the trunk portions **61a** to **61h** and the slits of the pixel electrode **60.**

In FIG. **7(c)****, 53a** represents the orientation (director) of the liquid crystal **52a,** and **53b** represents the director of the liquid crystal **52b** (which is generally equivalent to the average liquid crystal director in each domain). In other words, **53a** represents the azimuth of the director of the liquid crystal alignment which is defined by the first common electrode **45a,** the second common electrode **45b,** and the slit **47** in the presence of an applied voltage between the pixel electrode **60** and the common electrode **45,** and **53b** represents the azimuth of the director of the liquid crystal alignment which is defined by the plurality of branch portions **62a** to **62h** in each of the domains **51a** to **51h** in the presence of an applied voltage. Note that, in FIG. **7(b)****,** an end of the liquid crystal **52** which is closer to the counter substrate **20** is expressed by a circle. In FIG. **7(c)****,** the direction toward the counter substrate **20** is expressed by the arrows of the directors **53a** and **53b.**

As seen from FIG. **7(a)****,** according to the liquid crystal display device **100,** a generally uniform luminance distribution is achieved in each domain in the presence of an applied voltage. As seen from FIGS. **7(b)** and **7(c)****,** the director **53a** of the liquid crystal **52a** is oriented toward the slit **47** so as to be perpendicular to the extending direction of the slit **47** because the electric field is weak in the vicinity of the slit **47.** The director **53b** of the liquid crystal **52b** is oriented in a direction along the branch portions of the pixel electrode **60,** i.e., a direction which is different from the director **53a** by 45°. The angle difference between the director **53a** and the director **53b,** θ₁, is 45°, which is relatively small, and these directors cross each other at an acute angle. Thus, an alignment disturbance of the liquid crystal at the boundary between the liquid crystal **52a** and the liquid crystal **52b** is unlikely to occur (or occurrence of an alignment disturbance is restricted within a narrow area), so that a desired liquid crystal alignment (an alignment along the branch portions of the pixel electrode **60**) can be obtained over a large area. As a result, a relatively uniform luminance distribution can be obtained over the entire pixel **50** as shown in FIG. **7(a)****.**

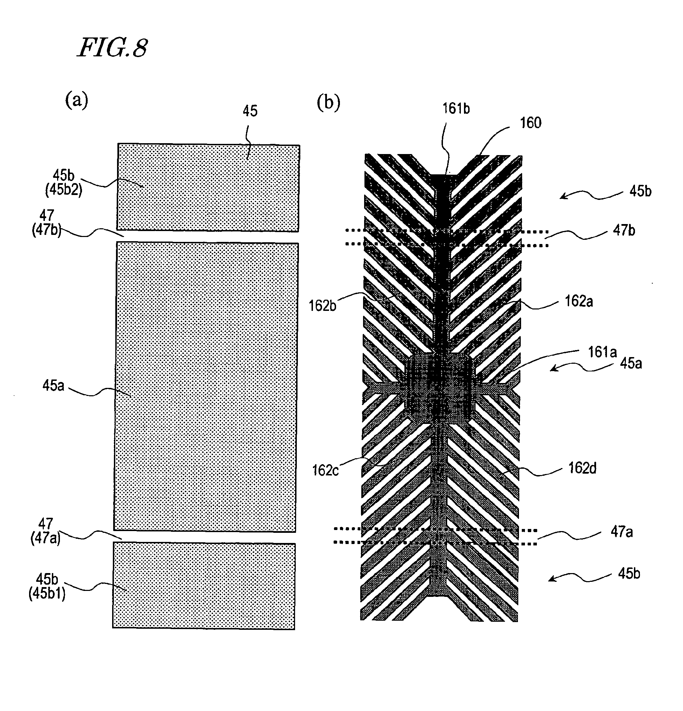

Now, a comparative example liquid crystal display device is described with reference to FIG. **8** and FIG. **9** for the sake of comparison with the liquid crystal display device **100** of Embodiment 1.

FIG. **8(a)** shows the shape of the common electrode **45** in one pixel of the comparative example liquid crystal display device. FIG. **8(b)** shows the configuration of a pixel electrode **160** in one pixel and the relationship of the layout between the common electrode **45** and the pixel electrode **160.**

The common electrode **45** of the comparative example has the same shape as that of the common electrode **45** of Embodiment 1 as shown in FIG. **8(a)****.** The pixel electrode **160** includes, when viewed from the Z direction as shown in FIG. **8(b)****,** a trunk portion **161a** extending in the X direction, a trunk portion **161b** extending in the Y direction, a plurality of branch portions **162a** extending from the trunk portion **161a** or the trunk portion **161b** in the 45° direction, a plurality of branch portions **162b** extending from the trunk portion **161a** or the trunk portion **161b** in the 135° direction, a plurality of branch portions **162c** extending from the trunk portion **161a** or the trunk portion **161b** in the 225° direction, and a plurality of branch portions **162d** extending from the trunk portion **161a** or the trunk portion **161b** in the 315° direction.

When viewed from the Z direction, the boundary between the first common electrode **45a** and the second common electrode **45b1** and the slit **47a** are arranged so as to extend across the branch portions **162c** and **162d,** without overlapping the trunk portion **161a** of the pixel electrode **160.** Also, the boundary between the first common electrode **45a** and the second common electrode **45b2** and the slit **47b** are arranged so as to extend across the branch portions **162a** and **162b,** without overlapping the trunk portion **161a** of the pixel electrode **160.**

FIG. **9(a)** is a diagram showing the transmittance distribution of a pixel in the comparative example in the presence of an applied voltage. FIGS. **9(b)** and **9(c)** are diagrams for illustrating the alignment of the liquid crystal **52** in that case. The voltage applied to the first common electrode **45a** and the second common electrode **45b** is 0 V, and the voltage applied to the pixel electrode **160** is 5 V, which are the same as the conditions for the alignment shown in FIG. **7****.**

Here, in the diagrams for illustrating the alignment of the liquid crystal **52,** the alignment shown is achieved when the same voltage is applied to the first common electrode **45a** and the second common electrode **45b.** However, when different voltages are applied to the first common electrode **45a** and the second common electrode **45b,** the orientations (directors) of the liquid crystal viewed from the Z direction are the same except that a darker region and a brighter region are formed.

FIG. **9(a)** shows a transmittance distribution in a pixel in the presence of an applied voltage. FIGS. **9(b)** and **9(c)** are diagrams for illustrating the alignment of the liquid crystal **52** in that case. In FIG. **9(b)****, 52a** represents the liquid crystal which is aligned in the vicinity of the slit **47** of the common electrode **45,** and **52b** represents the liquid crystal which is aligned in a region excluding the vicinity of the slit **47.** In FIG. **9(c)****, 53a** represents the orientation (director) of the liquid crystal **52a,** and **53b** represents the director of the liquid crystal **52b.** Note that, in FIG. **9(b)****,** an end of the liquid crystal **52** which is closer to the counter substrate **20** is expressed by a circle. In FIG. **9(c)****,** the direction toward the counter substrate **20** is expressed by the arrows of the directors **53a** and **53b.**

As seen from FIG. **9(a)****,** in the comparative example liquid crystal display device, a uniform luminance distribution is not obtained in each domain in the presence of an applied voltage, and a nonuniform luminance distribution can be seen in inner portions than the slits **47,** which are indicated by white broken circles in the drawing. This was caused for the following reasons.

As seen from FIGS. **9(b)** and **9(c)****,** in the vicinity of the slit **47,** the director **53a** of the liquid crystal **52a** is oriented toward the slit **47** so as to be perpendicular to the extending direction of the slit **47.** The director **53b** of the liquid crystal **52b** is oriented in a direction along the branch portions of the pixel electrode **160.** Here, since the slits **47** traverse the respective domains so as to extend across the branch portions **162a** to **162d,** the angle difference between the director **53a** and the director **53b,** θ₂, is 135°, which is a large obtuse angle, in inner portions than the respective slits **47** (portions closer to the pixel center). Therefore, a large twist is caused between the liquid crystal **52a** and the liquid crystal **52b,** leading to an alignment disturbance in the liquid crystal. As seen from FIG. **9(a)****,** a nonuniform luminance distribution occurs in each domain. Also, another possible defect is that the response speed of the liquid crystal alignment at the time of voltage application is slow.

According to the liquid crystal display device **100** of Embodiment 1, the difference between the principal director **53b** and the director **53a** in the vicinity of the slit **47** in each domain forms a relatively small acute angle. Therefore, abnormal alignment such as that occurred in the comparative example would not occur, and occurrence of a nonuniform luminance distribution in the display is prevented. The result of comparison of the luminance between the liquid crystal display device **100** of Embodiment 1 and the comparative example is that the luminance of the liquid crystal display device **100** of Embodiment 1 was higher than that of the comparative example by about 5%. Embodiment 1 and the comparative example were also compared as to occurrence of display roughness in middle grayscale level display. In the comparative example, display roughness was detected, whereas no display roughness was detected in the liquid crystal display device **100** of Embodiment 1.

According to the liquid crystal display device **100** of Embodiment 1, in the case where an alignment sustaining layer is formed using the above-described PSA technique, the difference between the director **53b** and the director **53a** in formation of the alignment sustaining layer can be a relatively small acute angle. Therefore, an alignment disturbance which may occur in fixing the pretilt of the liquid crystal in the alignment sustaining layer is prevented. Thus, an alignment of the liquid crystal with more appropriate orientations is memorized in the alignment sustaining layer, so that alignment of the liquid crystal which occurs when a voltage is applied can be completed within a shorter period of time.

### (Embodiment 2)

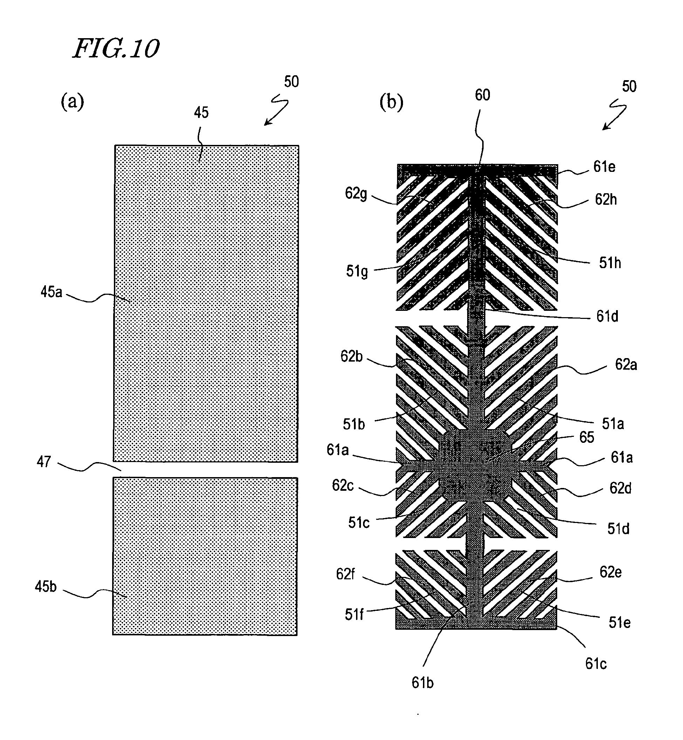

Next, a liquid crystal display device **100** of Embodiment 2 of the present invention is described with reference to FIG. **10** to FIG. **13****.** In the following description of the embodiment, the same elements as those of Embodiment 1 and elements which have the same functions as those of Embodiment 1 are denoted by the same reference numerals, and the descriptions of those elements and the descriptions of the effects achieved by those elements are omitted. The liquid crystal display device **100** of Embodiment 2 includes the same elements as those of Embodiment 1 except for elements of which the differences will be illustrated or described below.

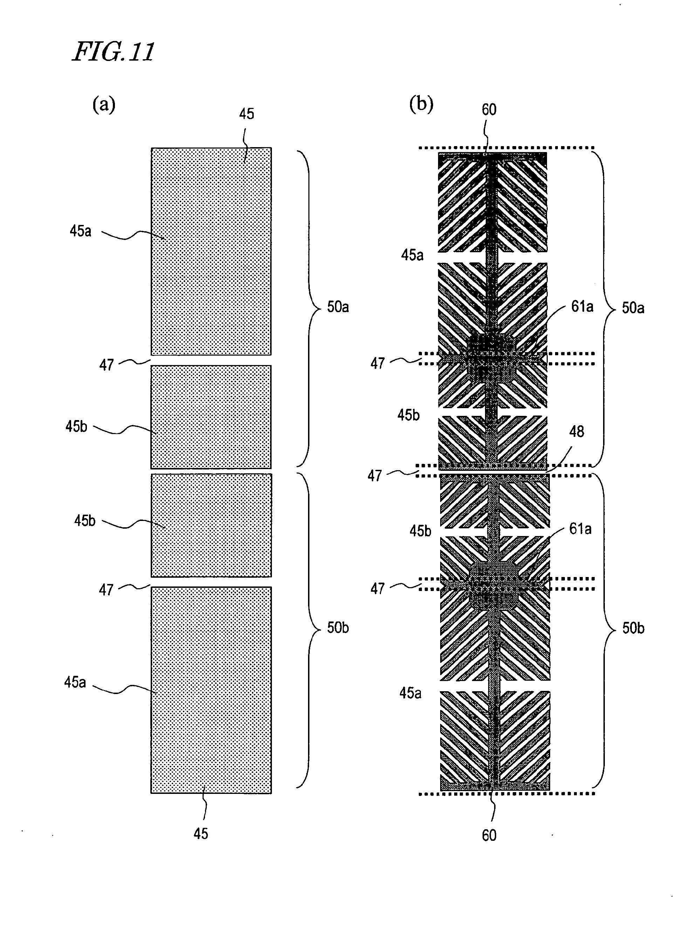

FIG. **10(a)** shows the shape of the common electrode **45** in one pixel **50.** FIG. **10 (b)** shows the shape of the pixel electrode **60** in one pixel **50.** FIG. **11(a)** shows the common electrodes **45** in two adjacent pixels **50a** and **50b** which are side by side along the Y direction. FIG. **11(b)** shows the relationship of the layout between the common electrodes **45** and the pixel electrodes **60** in the two pixels **50a** and **50b.**

As shown in FIG. **10** and FIG. **11(a)****,** the common electrode **45** includes a first common electrode **45a** and a second common electrode **45b.** When viewed from the Z direction, the second common electrode **45b** of the pixel **50a** adjoins the second common electrode **45b** of the adjacent pixel **50b** on the lower side (the negative Y direction side). These two second common electrodes **45b** are provided between the first common electrode **45a** of the pixel **50a** and the first common electrode **45a** of the pixel **50b.**

The shape of the common electrode **45** of the pixel **50a** and the shape of the common electrode **45** of the pixel **50b** are symmetric about the boundary between the pixel **50a** and the pixel **50b** or the boundary between the second common electrode **45b** of the pixel **50a** and the second common electrode **45b** of the pixel **50b.** The shape of the pixel electrode **60** of the pixel **50a** and the shape of the pixel electrode **60** of the pixel **50b** are also symmetric.

In each of the pixel **50a** and the pixel **50b,** there is a slit **47** formed between the first common electrode **45a** and the second common electrode **45b.** Also, there is another slit **47** between the second common electrode **45b** of the pixel **50a** and the second common electrode **45b** of the pixel **50b.**

The first common electrode **45a** of the pixel **50a** is formed so as to adjoin a first common electrode **45a** of an adjacent pixel on the upper side of the pixel **50a** with a slit interposed therebetween. The first common electrode **45a** of the pixel **50b** is formed so as to adjoin a first common electrode **45a** of an adjacent pixel on the lower side of the pixel **50b** with a slit interposed therebetween. When the slit **47** of the common electrode **45** is thus provided between the pixel **50a** and the pixel **50b,** no electric field is produced in this portion because the TFT substrate lying under the common electrode **45** also has a slit **48** formed between the pixel electrode **60** of the pixel **50a** and the pixel electrode **60** of the pixel **50b,** so that the liquid crystal maintains its initial alignment.

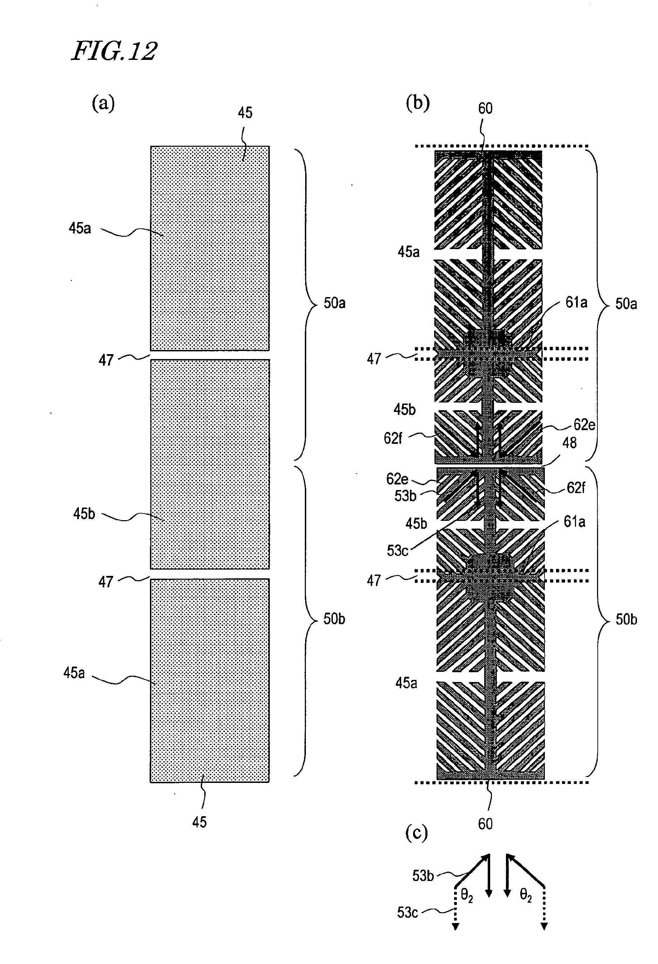

FIG. **12(a)** is a diagram showing the shape of the common electrodes **45** in two adjacent pixels **50a** and **50b** of a second comparative example liquid crystal display device. FIG. **12(b)** is a diagram showing the configuration of the pixel electrodes **60** in the two pixels **50a** and **50b,** the relationship of the layout between the common electrodes **45** and the pixel electrodes **60,** and the orientations of the liquid crystal domains in the presence of an applied voltage. FIG. **12(c)** is a diagram plainly illustrating the orientations of the liquid crystal domains.

In the second comparative example, as shown in FIGS. **12 (a)** and **12 (b)****,** there is no slit formed between the common electrodes **45b** of the two adjacent pixels **50a** and **50b,** and the both electrodes are integral with each other. The other part of the configuration of the second comparative example is the same as Embodiment 2.

In the case where the second common electrodes **45b** are integral with each other between the pixel **50a** and the pixel **50b** as in the second comparative example, the liquid crystal between the second common electrodes **45b** is regulated by the slit **48** formed between the pixel electrodes **60** of the pixel **50a** and the pixel **50b** such that the liquid crystal on the pixel **50a** side is oriented in the azimuth 90° direction and the liquid crystal on the pixel **50b** side is oriented in the azimuth 270° direction as indicated by the liquid crystal directors **53c** in FIGS. **12(b)** and **12(c).** However, the liquid crystal directors **53b** of the branch portions **62e** and **62f** extending over the second common electrode **45b** of the pixel **50a** are oriented in the azimuth 225° direction and the azimuth 315° direction, respectively. The liquid crystal directors **53b** of the branch portions **62e** and **62f** extending over the second common electrode **45b** of the pixel **50b** are oriented in the azimuth 45° direction and the azimuth 135° direction, respectively. Therefore, the angle between the azimuth of the liquid crystal directors **53c** which is regulated by the slit **48** between the two pixel electrodes **60** and the azimuth of the liquid crystal directors **53b** which is regulated by the branch portions **62e** and **62f,** θ₂, is an obtuse angle, specifically 135°. Thus, an alignment disturbance occurs in the boundary region such as shown in FIG. **9****.** According to Embodiment 2, occurrence of such an alignment disturbance is prevented.

As shown in FIG. **10(b)****,** the pixel electrode **60** includes a trunk portion **61a** extending in the X direction (first trunk portion), trunk portions **61c** and **61e** extending in the X direction (third trunk portions), trunk portions **61b** and **61d** extending in the Y direction (second trunk portion or fourth trunk portion), a plurality of branch portions **62a** extending from the trunk portion **61a** or the trunk portion **61d** in the 45° direction (first branch portions), a plurality of branch portions **62b** extending from the trunk portion **61a** or the trunk portion **61d** in the 135° direction (second branch portions), a plurality of branch portions **62c** extending from the trunk portion **61a** or the trunk portion **61b** in the 225° direction (third branch portions), and a plurality of branch portions **62d** extending from the trunk portion **61a** or the trunk portion **61b** in the 315° direction (fourth branch portions).

The pixel electrode **60** further includes a plurality of branch portions **62e** extending from the trunk portion **61c** or the trunk portion **61b** in the 45° direction (fifth branch portions), a plurality of branch portions **62f** extending from the trunk portion **61c** or the trunk portion **61b** in the 135° direction (sixth branch portions), a plurality of branch portions **62g** extending from the trunk portion **61e** or the trunk portion **61d** in the 225° direction (seventh branch portions), and a plurality of branch portions **62h** extending from the trunk portion **61e** or the trunk portion **61d** in the 315° direction (eighth branch portions).

Between adjacent two of the branch portions **62a** to **62h,** there is a slit extending in the same direction as the two adjacent branch electrodes. Due to the pixel electrode **60,** a 4D-structure multi-domain configuration, consisting of eight domains **51a** to **51h,** is formed in the pixel **50.**

As shown in FIG. **11(b)****,** when viewed from the Z direction, the boundary between the first common electrode **45a** and the second common electrode **45b** and the slit **47** formed on this boundary extend over the trunk portion **61a** of the pixel electrode **60** and extend in the same direction as the extending direction of the first trunk portion **61a.** When viewed from the Z direction, the plurality of branch portions **62a,** the plurality of branch portions **62b,** the plurality of branch portions **62g,** and the plurality of branch portions **62h** are arranged so as to extend over the first common electrode **45.** The plurality of branch portions **62c,** the plurality of branch portions **62d,** the plurality of branch portions **62e,** and the plurality of branch portions **62f** are arranged so as to extend over the second common electrode **45b.**

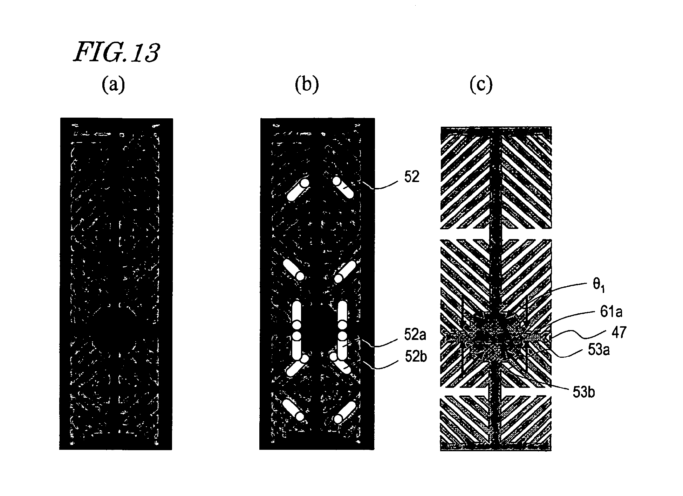

FIG. **13(a)** is a diagram showing the transmittance distribution of the pixel **50** in the presence of an applied voltage. FIGS. **13(b)** and **13(c)** are diagrams for illustrating the alignment of the liquid crystal **52** in that case. The applied voltages are the same as those mentioned in the description of FIG. **7** of Embodiment 1. In FIG. **13(b)****, 52a** represents the liquid crystal which is aligned in the vicinity of the slit **47** of the common electrode **45,** and **52b** represents the liquid crystal which is aligned in a region excluding the vicinity of the slit **47.** In FIG. **13(c)****, 53a** represents the director of the liquid crystal **52a,** and **53b** represents the director of the liquid crystal **52b.**

As seen from FIG. **13(a)****,** according to the liquid crystal display device **100,** a generally uniform luminance distribution is achieved in each domain in the presence of an applied voltage. As seen from FIGS. **13 (b)** and **13(c),** the director **53a** of the liquid crystal **52a** is oriented toward the slit **47** so as to be perpendicular to the extending direction of the slit **47.** The director **53b** of the liquid crystal **52b** is oriented in a direction along the branch portions of the pixel electrode **60,** i.e., a direction which is different from the director **53a** by 45°. The angle difference between the director **53a** and the director **53b,** θ₁, is 45°, which is relatively small, and these directors cross each other at an acute angle. Thus, an alignment disturbance of the liquid crystal at the boundary between the liquid crystal **52a** and the liquid crystal **52b** is unlikely to occur, so that a desired liquid crystal alignment can be obtained over a large area. As a result, a relatively uniform luminance distribution can be obtained over the entire pixel **50** as shown in FIG. **13(a)****.**

In the case where display is performed, the director of the liquid crystal in the vicinity of the slit **47** transitions from the azimuth indicated by **52a** to the azimuth indicated by **53b,** so that a dark line is produced. In Embodiment 2, there is only one slit between the first common electrode **45a** and the second common electrode **45b** in one pixel **50.** Therefore, high luminance display with a smaller dark line region than in the liquid crystal display device **100** of Embodiment 1 is possible.

The result of comparison of the display luminance between Embodiment 2 and the comparative example is that the luminance of Embodiment 2 was higher than that of the comparative example by about 10%. Embodiment 2 and the comparative example were also compared as to occurrence of display roughness in middle grayscale level display. In the comparative example, display roughness was detected, whereas no display roughness was detected in the liquid crystal display device **100** of Embodiment 2.

### (Embodiment 3)

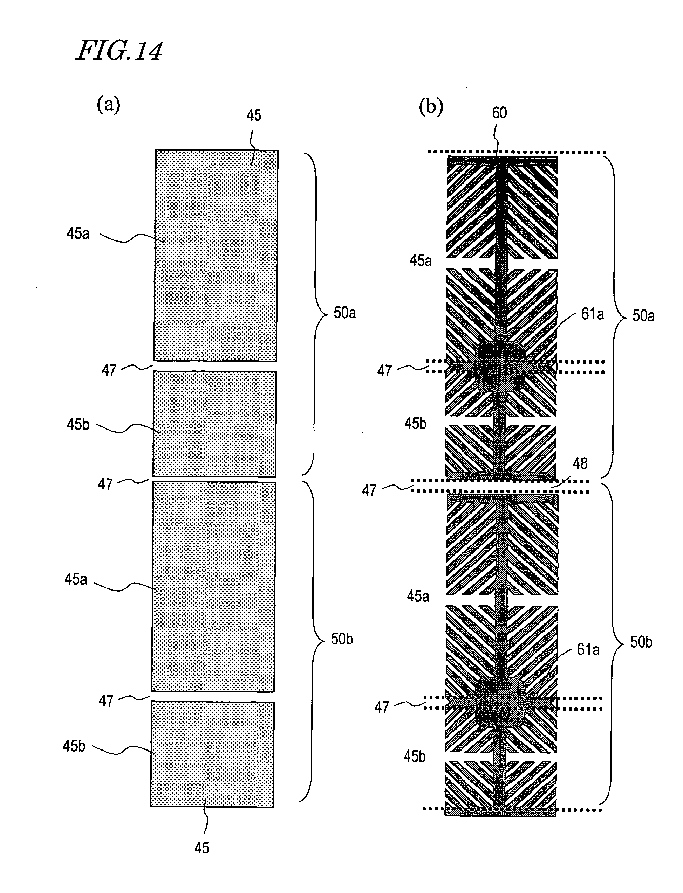

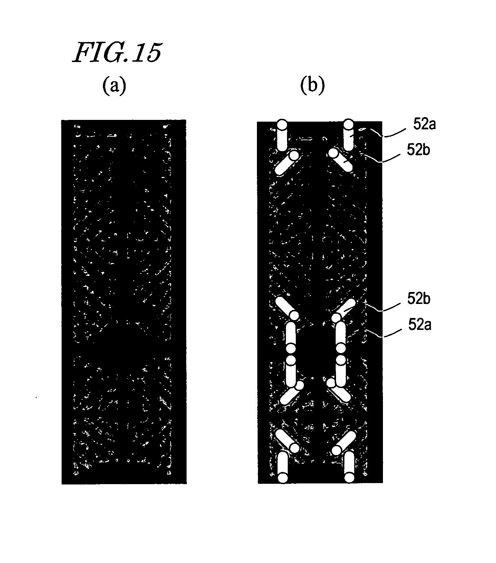

Next, a liquid crystal display device **100** of Embodiment 3 of the present invention is described with reference to FIG. **14** and FIG. **15****.** In the following description of the embodiment, the same elements as those of Embodiments 1 and 2 and elements which have the same functions as those of Embodiments 1 and 2 are denoted by the same reference numerals, and the descriptions of those elements and the descriptions of the effects achieved by those elements are omitted. The liquid crystal display device **100** of Embodiment 3 includes the same elements as those of Embodiments 1 and 2 except for elements of which the differences will be illustrated or described below.

The shape of the pixel electrode in the liquid crystal display device **100** of Embodiment 3 is the same as that of Embodiment 2, and therefore, the detailed description thereof is herein omitted.

FIG. **14(a)** shows common electrodes **45** in two adjacent pixels **50a** and **50b** which are side by side along the Y direction. FIG. **14(b)** shows the relationship of the layout between the common electrodes **45** and the pixel electrodes **60** in the two pixels **50a** and **50b.** In the pixels **50a** and **50b,** the common electrodes **45** and the pixel electrodes **60** have the same shapes, and the shapes of the common electrodes **45** and the pixel electrodes **60** are not symmetric about the boundary between the pixels **50a** and **50b** in contrast to Embodiment 2.

As shown in FIG. **14(a)****,** each of the common electrodes **45** of the pixel **50a** and the pixel **50b** includes a first common electrode **45a** and a second common electrode **45b.** When viewed from the Z direction, the second common electrode **45b** of the pixel **50a** adjoins the first common electrode **45a** of the pixel **50b.** Between the first common electrode **45a** of the pixel **50a** and the first common electrode **45a** of the pixel **50b,** the second common electrode **45b** of the pixel **50a** is provided. Between the second common electrode **45b** of the pixel **50a** and the second common electrode **45b** of the pixel **50b,** the first common electrode **45a** of the pixel **50b** is provided.

In each of the pixel **50a** and the pixel **50b,** there is a slit **47** formed between the first common electrode **45a** and the second common electrode **45b.** There is another slit **47** formed between the second common electrode **45b** of the pixel **50a** and the first common electrode **45a** of the pixel **50b.** When the slit **47** of the common electrode is thus provided between the pixel **50a** and the pixel **50b,** no electric field is produced in this portion because the TFT substrate lying under the common electrode also has a slit **48** formed between the pixel electrode **60** of the pixel **50a** and the pixel electrode **60** of the pixel **50b,** so that the liquid crystal maintains its initial alignment.

As shown in FIG. **14(b)****,** when viewed from the Z direction, the boundary between the first common electrode **45a** and the second common electrode **45b** and the slit **47** formed on this boundary extend over the trunk portion **61a** of the pixel electrode **60** and extend in the same direction as the extending direction of the first trunk portion **61a.**

FIG. **15(a)** is a diagram showing the transmittance distribution of the pixel **50** in the presence of an applied voltage. FIG. **15(b)** is a diagram for illustrating the alignment of the liquid crystal **52** in that case. The applied voltages are the same as those mentioned in the description of FIG. **7** of Embodiment 1.

As seen from FIG. **15(a)****,** according to Embodiment 3, a generally uniform luminance distribution is achieved in each domain in the presence of an applied voltage. As seen from FIG. **15(b)****,** the director of the liquid crystal **52a** is oriented toward the slit **47** so as to be perpendicular to the extending direction of the slit **47.** The director of the liquid crystal **52b** is oriented in a direction along the branch portions of the pixel electrode **60,** i.e., a direction which is different from the director of the liquid crystal **52a** by 45°. The angle difference between the director of the liquid crystal **52a** and the director of the liquid crystal **52b,** θ₁, is 45°, which is a small angle, and these directors cross each other at an acute angle. Thus, an alignment disturbance of the liquid crystal at the boundary between the liquid crystal **52a** and the liquid crystal **52b** is unlikely to occur, so that a desired liquid crystal alignment can be obtained over a large area. As a result, a relatively uniform luminance distribution can be obtained over the entire pixel **50** as shown in FIG. **15(a)****.**

In one pixel **50,** there is only one slit between the first common electrode **45a** and the second common electrode **45b.** Therefore, high luminance display with a smaller liquid crystal alignment disturbance than in the liquid crystal display device **100** of Embodiment 1 is possible.

In the liquid crystal display device **100** of Embodiment 3, the second common electrode **45b** of the pixel **50a** is arranged so as to adjoin the first common electrode **45a** of the pixel **50b.** Therefore, a darker region produced due to the first common electrode **45a** and a brighter region produced due to the second common electrode **45b** are separated from each other, so that the respective regions become less perceivable.

In the liquid crystal display device **100** of Embodiment 2, the second common electrode **45b** of the pixel **50a** and the second common electrode **45b** of the pixel **50b** are arranged so as to adjoin each other, so that brighter regions of these pixels, or darker regions of these pixels, adjoin each other. Accordingly, a brighter region or a darker region which appears along the boundary between the pixel **50a** and the pixel **50b** is perceived so as to have a double width. However, in the liquid crystal display device **100** of Embodiment 3, the second common electrode **45b** of the pixel **50a** is arranged so as to adjoin the first common electrode **45a** of the pixel **50b,** so that a brighter region and a darker region adjoin each other. Accordingly, the brighter region or the darker region is perceived so as to have a half width of that of Embodiment 2. Therefore, according to Embodiment 3, display in which the luminance difference between the brighter region and the darker region is less perceivable than in Embodiment 2 is possible.

Although no problem arises so long as the resolution is sufficiently high, the luminance difference between the brighter region and the darker region may sometimes be visually perceived as a flicker when the pixel size is large and the resolution is low. In the liquid crystal display device **100** of Embodiment 3, the second common electrode **45b** of the pixel **50a** is arranged so as to adjoin the first common electrode **45a** of the pixel **50b.** In middle grayscale level display, the probability that the luminance difference between the brighter region and the darker region is visually perceived as a flicker is decreased.

### INDUSTRIAL APPLICABILITY

The present invention is applicable for improving the display characteristics of a vertical alignment type liquid crystal display device.

### REFERENCE SIGNS LIST

- **10**: TFT substrate
- **12**: TFT
- **14**: scan line
- **16**: signal line
- **18**: storage capacitor line
- **20**: counter substrate
- **22**: scan line driving circuit
- **23**: signal line driving circuit
- **24**: control circuit
- **26, 27**: polarizer
- **28**: backlight unit
- **30**: liquid crystal layer
- **32**: transparent substrate
- **34**: insulating layer
- **36**: alignment film
- **42**: transparent substrate
- **44**: color filter
- **45**: common electrode (counter electrode)
- **45a**: first common electrode
- **45b**: second common electrode
- **46**: alignment film
- **47, 48**: slit
- **50**: pixel
- **51a-51h**: domain
- **52, 52a, 52b**: liquid crystal
- **53a, 53b, 53c**: director
- **60**: pixel electrode
- **61a-61e**: trunk portion
- **62a-62h**: branch portion
- **65**: storage capacitor counter electrode
- **100**: liquid crystal display device
- **110**: display region
- **111**: peripheral region
- **112a**: first terminal
- **112b**: second terminal
- **160**: pixel electrode
- **161a, 161b**: trunk portion
- **162a-162d**: branch portion

## Claims

1. A liquid crystal display device, comprising:
a TFT substrate which has a pixel electrode provided in a pixel;
a counter substrate which has a common electrode provided opposite to the pixel electrode; and
a vertical alignment type liquid crystal layer which is provided between the TFT substrate and the counter substrate,
wherein the common electrode includes a first common electrode and a second common electrode which is capable of applying a different voltage from that applied by the first common electrode,
the pixel electrode includes a first trunk portion, a second trunk portion, a plurality of first branch portions extending from the first trunk portion or the second trunk portion in a first direction, a plurality of second branch portions extending from the first trunk portion or the second trunk portion in a second direction, a plurality of third branch portions extending from the first trunk portion or the second trunk portion in a third direction, and a plurality of fourth branch portions extending from the first trunk portion or the second trunk portion in a fourth direction,
the first direction, the second direction, the third direction, and the fourth direction are different directions from one another, and
when the pixel is viewed from a direction perpendicular to a plane of the TFT substrate, a boundary between the first common electrode and the second common electrode extends over the first trunk portion of the pixel electrode and extends in a same direction as an extending direction of the first trunk portion.

2. The liquid crystal display device of claim 1, wherein the first direction, the second direction, the third direction, and the fourth direction are different from the extending direction of the first trunk portion by 45°, 135°, 225°, and 315°, respectively.

3. The liquid crystal display device of claim 1 or 2, wherein
a slit is provided at the boundary between the first common electrode and the second common electrode, and
when a voltage is applied between the pixel electrode and the common electrode, an azimuth of a director of a liquid crystal orientation which is defined by respective one of the plurality of first branch portions, the plurality of second branch portions, the plurality of third branch portions, and the plurality of fourth branch portions forms an acute angle with an azimuth of a director of a liquid crystal orientation which is defined by the first common electrode, the second common electrode, and the slit.

4. The liquid crystal display device of claim 3, wherein the acute angle is about 45°.

5. The liquid crystal display device of any of claims 1 to 4, wherein the pixel electrode includes a plurality of fifth branch portions extending in the first direction, a plurality of sixth branch portions extending in the second direction, a plurality of seventh branch portions extending in the third direction, and a plurality of eighth branch portions extending in the fourth direction.

6. The liquid crystal display device of claim 5 wherein, when a voltage is applied between the pixel electrode and the common electrode, the plurality of first branch portions, the plurality of second branch portions, the plurality of third branch portions, and the plurality of fourth branch portions form four domains which have different liquid crystal orientations, and the plurality of fifth branch portions, the plurality of sixth branch portions, the plurality of seventh branch portions, and the plurality of eighth branch portions form four other domains which have different liquid crystal orientations.

7. The liquid crystal display device of claim 5 or 6 wherein, when the pixel is viewed from a direction perpendicular to the plane of the TFT substrate, the plurality of first branch portions, the plurality of second branch portions, the plurality of seventh branch portions, and the plurality of eighth branch portions are provided so as to extend over the first common electrode, and the plurality of third branch portions, the plurality of fourth branch portions, the plurality of fifth branch portions, and the plurality of sixth branch portions are provided so as to extend over the second common electrode.

8. The liquid crystal display device of claim 7, wherein
in the pixel, the second common electrode includes a first electrode portion and a second electrode portion between which the first common electrode is interposed, and
when the pixel is viewed from a direction perpendicular to the plane of the TFT substrate, the plurality of third branch portions and the plurality of fourth branch portions are provided so as to extend over the first electrode portion, and the plurality of fifth branch portions and the plurality of sixth branch portions are provided so as to extend over the second electrode portion.

9. The liquid crystal display device of claim 8, wherein
the pixel electrode includes a third trunk portion and a fourth trunk portion, and
the plurality of fifth branch portions, the plurality of sixth branch portions, the plurality of seventh branch portions, and the plurality of eighth branch portions extend from the third trunk portion or the fourth trunk portion.

10. The liquid crystal display device of claim 9 wherein, when the pixel is viewed from a direction perpendicular to the plane of the TFT substrate, a boundary between the first electrode portion of the second common electrode and the first common electrode extends over the first trunk portion and extends in a same direction as the extending direction of the first trunk portion, and a boundary between the second electrode portion of the second common electrode and the first common electrode extends over the third trunk portion and extends in a same direction as an extending direction of the third trunk portion.

11. The liquid crystal display device of any of claims 1 to 7, further comprising another pixel which is adjacent to the pixel, wherein
the another pixel includes part of the second common electrode, and
when the pixel and the another pixel are viewed from a direction perpendicular to the plane of the TFT substrate, the second common electrode of the pixel and a second common electrode of the another pixel are provided between the first common electrode of the pixel and a first common electrode of the another pixel.

12. The liquid crystal display device of claim 11, wherein a shape of the pixel electrode of the pixel and a shape of a pixel electrode of the another pixel are symmetric about a boundary line between the second common electrode of the pixel and the second common electrode of the another pixel.

13. The liquid crystal display device of claim 11 or 12, wherein a slit is provided between the second common electrode of the pixel and the second common electrode of the another pixel.

14. The liquid crystal display device of any of claims 1 to 7, further comprising another pixel which is adjacent to the pixel, wherein
the another pixel includes part of the second common electrode, and
when the pixel and the another pixel are viewed from a direction perpendicular to the plane of the TFT substrate, the second common electrode of the pixel is provided between the first common electrode of the pixel and a first common electrode of the another pixel, and the first common electrode of the another pixel is provided between the second common electrode of the pixel and a second common electrode of the another pixel.

15. The liquid crystal display device of claim 14, wherein a slit is provided between the first common electrode of the pixel and the second common electrode of the another pixel.

16. The liquid crystal display device of any of claims 1 to 15, further comprising an alignment sustaining layer over a surface of at least one of the TFT substrate and the counter substrate which is closer to the liquid crystal layer, the alignment sustaining layer being configured to define an orientation of a liquid crystal in the absence of an applied voltage,
wherein the alignment sustaining layer is made of a polymer which is obtained by photopolymerizing a photopolymerizable monomer contained in a liquid crystal layer in the presence of an applied voltage across the liquid crystal layer.

17. The liquid crystal display device of any of claims 1 to 16, further comprising a display region which includes a plurality of pixels and a peripheral region lying outside the display region, wherein
each of the first common electrode and the second common electrode is divided into a plurality of segments linearly extending parallel to one another in the display region,
the plurality of segments of the first common electrode and the plurality of segments of the second common electrode are alternately provided,
in the peripheral region, the plurality of segments of the first common electrode are coupled together and coupled to a first terminal section, and the plurality of segments of the second common electrode are coupled together and coupled to a second terminal section, and
in the peripheral region, a wire path of the first common electrode and a wire path of the second common electrode are generally symmetrically arranged.
